# EUROPEAN PATENT APPLICATION

(11) **EP 4 676 024 A1**
(43) Date of publication of application: **07.01.2026**
(21) Application number: 25171466.3
(22) Date of filing: 18.04.2025
(51) Int. Cl.: H04N 9/31

(54) **LINKAGE SYSTEM WITH LED PROJECTION AND SOUND**

(30) Priority: 04.07.2024 CN 202421573859 U; 04.07.2024 CN 202421573863 U; 04.07.2024 CN 202421573864 U; 04.07.2024 CN 202421573873 U; 23.08.2024 CN 202422056460 U; 08.11.2024 CN 202422727497 U
(71) Applicant: GBA Branch of Aerospace Information Research Institute, Chinese Academy of Sciences, Guangzhou, Guangdong 510535 (CN)
(72) Inventor: LIU, Jian, Guangzhou, Guangdong, 510535 (CN); YAN, Kun, Guangzhou, Guangdong, 510535 (CN); ZHAO, Di, Guangzhou, Guangdong, 510535 (CN); FANG, Guangyou, 510535 Guangzhou, Guangdong (CN)
(74) Representative: CAPRI

(57) **Abstract**

A linkage system with LED projection and sound is provided, includes a sound apparatus, a linkage control apparatus and an LED direct-view projection apparatus. The LED direct-view projection apparatus includes an LED array, a beam-homogenizing and color-mixing component, and a projection module. The LED array is connected to the linkage control apparatus and configured to control a light-emitting state of each LED lamp bead in the LED array based on the to-be-displayed screen data. The LED lamp bead serves as a pixel unit. The beam-homogenizing and color-mixing component is arranged on an optical path where light emitted from the LED array travels. The projection module is arranged on an optical path where light emitted from the beam-homogenizing and color-mixing component travels.

## Description

This application claims the priority to Chinese Patent Application No. 2024220564608, titled "LINKAGE SYSTEM WITH LED PROJECTION AND SOUND", filed on August 23, 2024 with the China National Intellectual Property Administration, which is incorporated herein by reference in its entirety.

This application claims the priority to Chinese Patent Application No. 2024215738737, titled "DYNAMIC ATMOSPHERE PROJECTION SYSTEM", filed on July 4, 2024 with the China National Intellectual Property Administration, which is incorporated herein by reference in its entirety.

This application claims the priority to Chinese Patent Application No. 2024215738633, titled "ATMOSPHERE PROJECTION LAMP", filed on July 4, 2024 with the China National Intellectual Property Administration, which is incorporated herein by reference in its entirety.

This application claims the priority to Chinese Patent Application No. 2024215738648, titled "ATMOSPHERE PROJECTION LAMP", filed on July 4, 2024 with the China National Intellectual Property Administration, which is incorporated herein by reference in its entirety.

This application claims the priority to Chinese Patent Application No. 2024215738597, titled "SOFT LENS MODULE", filed on July 4, 2024 with the China National Intellectual Property Administration, which is incorporated herein by reference in its entirety.

This application claims the priority to Chinese Patent Application No. 2024227274979, titled "NOVEL ATMOSPHERE PROJECTION SYSTEM", filed on November 8, 2024 with the China National Intellectual Property Administration, which is incorporated herein by reference in its entirety.

### FIELD

The present disclosure relates to the technical field of LED projection and audio-visual devices, in particular to a linkage system with LED projection and sound.

### BACKGROUND

As science and technology progresses and living standards of people improve, a sound apparatus for playing sound only no longer satisfies demand for practical applications. Therefore, a linkage system with light and sound is provided according to the conventional technology to play music with lighting changes. The lighting may be linked with sound in a form of display, that is, a light source emits colorful light during a process of playing music. Alternatively, the lighting may be linked with the sound in a form of projection, that is, a light projection device such as a projection lamp or an atmosphere lamp projects different light spots or patterns during the process of playing music.

However, in the conventional technology, regardless of the linkage in the form of display or projection, the lighting simply shows different color changes or projects fixed light spots or patterns, resulting in a technical problem of the monotonous display content, failing to accurately expressing musical emotion and failing to achieve a real linkage of projection and sound.

### SUMMARY

The objective of the present disclosure is to solve at least one of the technical defects described above, particularly the technical defect of the monotonous display content in the conventional technology.

In some embodiments, a linkage system with light-emitting diode, LED, projection and sound is provided according to the present disclosure, and includes:
a sound apparatus, configured to play audio data;
a linkage control apparatus connected to the sound apparatus, configured to call a pre-configured artificial intelligence, AI, service, and identify audio content of the audio data by using the AI service to obtain to-be-displayed screen data; and
an LED direct-view projection apparatus, connected to the linkage control apparatus, and configured to perform projection display on the to-be-displayed screen data.

In some embodiments, the LED direct-view projection apparatus includes:
an LED array, connected to the linkage control apparatus, and configured to control a light-emitting state of each LED lamp bead in the LED array based on the to-be-displayed screen data, where the LED lamp bead serves as a pixel unit;
a beam-homogenizing and color-mixing component, arranged on an optical path where light emitted from the LED array travels; and
a projection module, arranged on an optical path where light emitted from the beam-homogenizing and color-mixing component travels.

In some embodiments, the projection module includes at least one of:
a conventional lens;
an unconventional lens; or
a Fresnel lens.

In some embodiments, the unconventional lens includes at least one of:
a parabolic lens;
a freeform surface lens;
a microlens; or
a microlens array.

In some embodiments, the LED direct-view projection apparatus further includes a housing. A light channel is formed in the housing, and the LED array for emitting a beam of light with a dynamic pattern, the beam-homogenizing and color-mixing component and the projection module are arranged in the light channel. The beam-homogenizing and color-mixing component includes at least one beam homogenizer arranged at the optical path where light emitted from the LED array travels. The projection module includes a first collimating lens, arranged on an optical path where light emitted from the at least one beam homogenizer travels; and a second collimating lens, arranged on an optical path where light emitted from the first collimating lens travels, where light emitted from the LED array passes through the beam-homogenizing and color-mixing component, the first collimating lens and the second collimating lens sequentially to form a soft image projection.

In some embodiments, a main optical axis of the first collimating lens coincides with a main optical axis of the second collimating lens.

In some embodiments, the first collimating lens includes a first Fresnel lens, where a focusing surface side of the first Fresnel lens is arranged away from the at least one beam homogenizer; and the second collimating lens includes a convex lens, arranged on an optical path where light emitted from the first Fresnel lens travels.

In some embodiments, the convex lens is a plano-convex lens, and an incident surface of the plano-convex lens is flat surface. The at least one beam homogenizer, the first Fresnel lens and the plano-convex lens are sequentially arranged to be parallel to each other in the light channel, and the beam of light passes through a convex surface of the plano-convex lens to form the soft image projection onto a projection object.

In some embodiments, the first collimating lens includes a first Fresnel lens, where a focusing surface side of the first Fresnel lens is arranged away from the at least one beam homogenizer; and the second collimating lens includes a second Fresnel lens arranged on an optical path where light emitted from the first Fresnel lens travels.

In some embodiments, a distance between the first collimating lens and the at least one beam homogenizer ranges from 1mm to 100mm, and a focal length of the first collimating lens ranges from 20mm to 300mm; and a distance between the second collimating lens and the first collimating lens ranges from 1mm to 200mm, and a focal length of the second collimating lens ranges from 20mm to 300mm.

In some embodiments, a distance between a scattering surface of the at least one beam homogenizer and a light-emitting surface of the LED array is less than or equal to 20mm.

In some embodiments, the at least one beam homogenizer each includes a light guide plate and an atomization layer covering the light guide plate, and the atomization layer is configured to cover one or both sides of the light guide plate.

In some embodiments, the housing is provided with a heat dissipation plate, the heat dissipation plate abuts against the LED array, and the heat dissipation plate is made of metal material.

In some embodiments, the LED direct-view projection apparatus includes:
a housing, where a light channel is formed in the housing;
an LED array, arranged in the light channel and connected to the linkage control apparatus, and configured to emit a beam of light with a dynamic pattern; where the LED array includes:
   a substrate; and
   at least one lamp bead arranged on the substrate; where the lamp beads are arranged in an array when a quantity of the at least one lamp bead is more than one; and
a projection module, arranged in the light channel, where the projection module includes:
   a first Fresnel lens, arranged on an optical path where light emitted from the LED array travels; and
   a second Fresnel lens, arranged on an optical path where light emitted from the first Fresnel lens travels,
where light emitted from the LED array passes through the first Fresnel lens and the second Fresnel lens sequentially to form a soft image projection.

In some embodiments, a focusing surface side of the first Fresnel lens is arranged away from an LED array side, and a focusing surface side of the second Fresnel lens is arranged away from the LED array side.

In some embodiments, a distance between the first Fresnel lens and the LED array ranges from 1mm to 350mm, and a focal length of the first Fresnel lens ranges from 20mm to 300mm.

In some embodiments, a main optical axis of the first Fresnel lens coincides with a main optical axis of the second Fresnel lens.

In some embodiments, the LED direct-view projection apparatus includes:
a housing, where a light channel is formed in the housing;
an LED array, arranged in the light channel and connected to the linkage control apparatus, and configured to emit a beam of light with a dynamic pattern, where the LED array includes:
   a substrate; and
   at least one lamp bead arranged on the substrate, where the lamp beads are arranged in an array when a quantity of the at least one lamp bead is more than one; and
a projection module, arranged in the light channel, where the projection module includes:
   a first Fresnel lens, arranged on an optical path where light emitted from the LED array travels; and
   a plano-convex lens, arranged on an optical path where light emitted from the first Fresnel lens travels,
where light emitted from the LED array passes through the first Fresnel lens and the plano-convex lens sequentially to form a soft image projection.

In some embodiments, a focusing surface side of the first Fresnel lens is arranged away from an LED array, and a focusing surface side of the plano-convex lens is arranged away from the LED array.

In some embodiments, a distance between the first Fresnel lens and the LED array ranges from 1mm to 150mm, and a focal length of the first Fresnel lens ranges from 20mm to 300mm; and
a distance between the plano-convex lens and the first Fresnel lens ranges from 1mm to 200mm, and a focal length of the plano-convex lens ranges from 20mm to 300mm.

In some embodiments, a main optical axis of the first Fresnel lens coincides with a main optical axis of the plano-convex lens.

In some embodiments, the housing is provided with a heat dissipation plate, the heat dissipation plate abuts against the LED array, and the heat dissipation plate is made of metal material.

In some embodiments, the conventional lens includes at least one of: a plano-convex lens; or a convex lens.

In the linkage system with LED projection and sound according to some embodiments of the present disclosure, the LED direct-view projection apparatus supports pixel-level display of images and videos. Hence, diverse contents can be displayed by linking the LED direct-view projection apparatus with the sound apparatus, thereby solving the technical problem of the monotonous display content.

In addition, the linkage control apparatus calls the AI service to analyze and identify the audio content in a real time manner, generates to-be-displayed screen data matching music content, and controls the LED direct-view projection apparatus to perform synchronous playing. In this way, the LED direct-view projection apparatus synchronously projects and displays content that accurately expresses musical emotion and enhances the sense of atmosphere during the process of playing a music, thereby achieving the real linkage of the projection and sound.

### BRIEF DESCRIPTION OF THE DRAWINGS

For clearer illustration of the technical solutions according to embodiments of the present disclosure or conventional technology, drawings to be applied in embodiments of the present disclosure or conventional technology are briefly described hereinafter. Apparently, the drawings in the following descriptions are only some embodiments of the present disclosure, and other drawings may be obtained by those skilled in the art based on the provided drawings without any creative effort.
FIG. 1 is a schematic diagram of a linkage system with LED projection and sound according to an embodiment;
FIG. 2 is a schematic diagram of a linkage system with LED projection and sound according to another embodiment;
FIG. 3 is a schematic diagram of a linkage system with LED projection and sound according to another embodiment;
FIG. 4 is a schematic diagram of a linkage system with LED projection and sound according to another embodiment;
FIG. 5 is a schematic diagram of an external structure of an LED direct-view projection apparatus according to an embodiment;
FIG. 6 is a schematic diagram of an internal structure of an LED direct-view projection apparatus according to an embodiment;
FIG. 7 is a front view of a beam generator according to an embodiment;
FIG. 8 is a schematic diagram of an internal structure of an LED direct-view projection apparatus according to another embodiment;
FIG. 9 is a schematic diagram of an internal structure of an LED direct-view projection apparatus according to another embodiment;
FIG. 10 is a schematic diagram of an internal structure of an LED direct-view projection apparatus according to another embodiment;
FIG. 11 is a schematic diagram of an internal structure of an LED direct-view projection apparatus according to another embodiment; and
FIG. 12 is a schematic diagram of an internal structure of an LED direct-view projection apparatus according to another embodiment.

Reference numerals are described as follows.

10-sound apparatus, 20-linkage control apparatus, 30-LED direct-view projection apparatus, 310-LED array, 320-beam homogenizer, 330-projection module, 331-first collimating lens, 332-second collimating lens, 3311-Fresnel lens, 3312-plano-convex lens, 340-lens group, 350-housing, 360-heat dissipation plate, 370-beam generator, 371-substrate, 372-lamp bead, 380-light-emitting baseplate, 390-condenser lens

### DETAILED DESCRIPTION

The solutions in the embodiments of the present disclosure are described clearly and completely hereinafter in conjunction with the drawings in the embodiments of the present disclosure. It is apparent that the described embodiments are only a part of the embodiments of the present disclosure and not all of the embodiments. Based on the embodiments of the present disclosure, all other embodiments obtained by those skilled in the art without any creative work fall into the protection scope of the present disclosure.

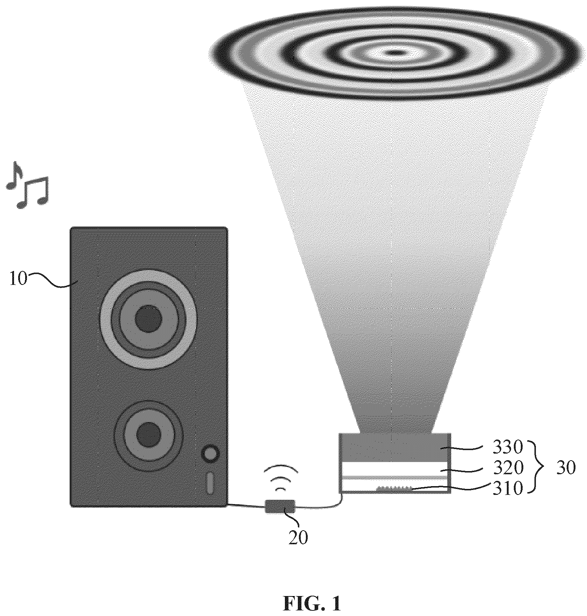

As shown in FIGS. 1 to 4, a linkage system with LED projection and sound is provided according to some embodiments of the present disclosure. The linkage system includes a sound apparatus 10, a linkage control apparatus 20, and an LED direct-view projection apparatus 30, where the linkage control apparatus 20 is connected to the sound apparatus 10 and the LED direct-view projection apparatus 30.

The sound apparatus 10 may be a device with an audio playing function. It can be understood that the sound apparatus 10 may be determined based on actual application requirements, which is not limited herein. A size, a type or other parameters of the sound apparatus 10 may be determined based on the determined sound apparatus 10.

The linkage control apparatus 20 may be a circuit, a component, or a device with a data processing function and a control function. The LED direct-view projection apparatus 30 may be a device combining direct view LED technology with projection technology, and is configured to perform projection display on condition that an LED array serves as a projection light source.

It should be noted that the number of the linkage control apparatus 20 may be one or more, and the number of the LED direct-view projection apparatus 30 may be one or more. The number of the linkage control apparatus 20 and the number of the LED direct-view projection apparatus 30 are determined according to an actual situation, which are not limited herein.

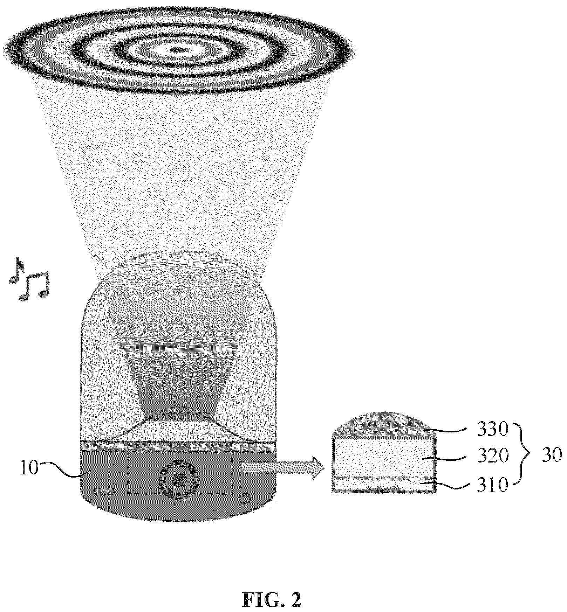

In an embodiment, the LED direct-view projection apparatus 30 may be combined with the sound apparatus 10 in a built-in way, an external way, a combination way, or the like. As shown in FIG. 2, the built-in way refers that the LED direct-view projection apparatus 30 is built into the sound apparatus 10, so that the LED direct-view projection apparatus 30 and the sound apparatus 10 are integrated as a whole.

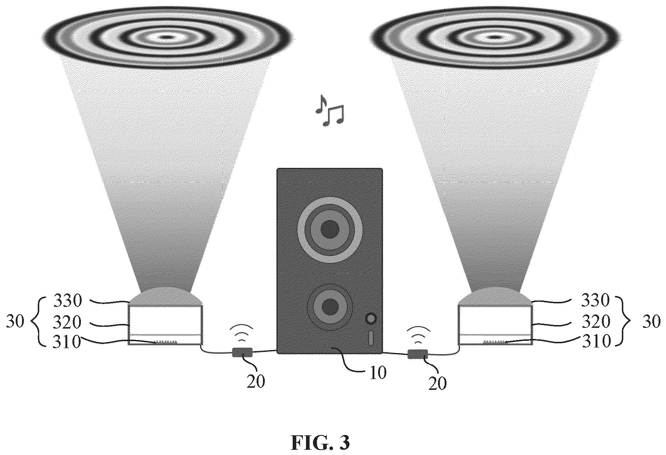

As shown in FIG. 3, the external way refers that the LED direct-view projection apparatus 30 and the sound apparatus 10 are provided as two separate individuals, and are connected to each other by the linkage control apparatus. Furthermore, one sound apparatus 10 may be connected to multiple LED direct-view projection apparatuses 30 through the linkage control apparatus 20.

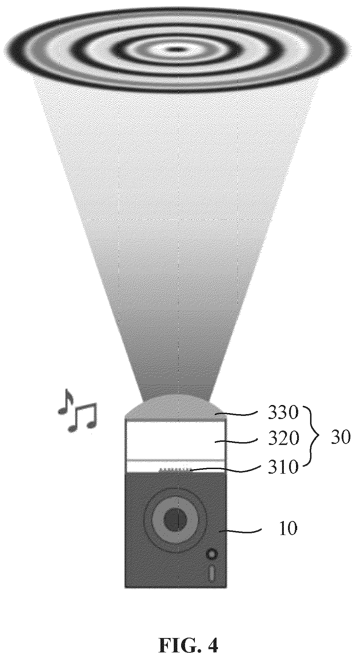

As shown in FIG. 4, the combination way refers that the LED direct-view projection apparatus 30 is combined with the sound apparatus 10 by surface bonding, mechanical connection, or the like, so that the LED direct-view projection apparatus 30 and the sound apparatus 10 are integrated as a whole.

In an embodiment, the sound apparatus 10 may play audio data to realize the audio playing function. In an example, the sound apparatus 10 is connected to a control terminal such as a mobile terminal, a notebook computer, or a tablet computer in a communication connection manner such as WIFI or Bluetooth, so that the control terminal is able to control the sound apparatus through an applet, an application program, a cloud, or the like.

The linkage control apparatus 20 may be connected to the sound apparatus 10 and the LED direct-view projection apparatus 30 in a wired manner and/or a wireless manner. Furthermore, in an example, the linkage control apparatus 20 may be connected to a control terminal such as a mobile terminal, a notebook computer, or a tablet computer in a communication connection manner such as WIFI or Bluetooth, so that the control terminal is able to issue a control instruction to the linkage control apparatus 20 through an applet, an application program, a cloud, or the like.

The linkage control apparatus 20 may call a preconfigured AI (Artificial Intelligence) service, parse and identify audio content corresponding to the audio data in a real-time manner by using the AI service, to obtain an AI identification result. The AI identification result includes a to-be-displayed screen data. The to-be-displayed screen data may be a to-be-played image data and/or a to-be-played video frame data. In an example, the linkage control apparatus 20 may access an AI software service deployed locally or deployed by SaaS (Software as a Service) through a control terminal, to obtain the to-be-displayed screen data.

Upon obtaining the to-be-displayed screen data, the linkage control apparatus 20 controls the LED direct-view projection apparatus 30 to synchronously project and display a to-be-displayed screen. In this way, screen content capable of expressing musical emotion and enhancing a sense of atmosphere can be projected synchronously during the process of playing an audio, so that display content is very expressive and has diverse styles and strong sense of atmosphere or other advantages.

In some embodiments, the LED direct-view projection apparatus 30 includes an LED array 310, a beam-homogenizing and color-mixing component, and a projection module 330. The LED array 310 serves as a light source of the LED direct-view projection apparatus 30 and may include one or more LED lamp beads. Each LED lamp bead serves as a pixel unit. The LED array 310 is able to display an image or a video by controlling a light-emitting brightness, a light-emitting color, a flash state or other light-emitting state of each LED lamp bead.

In an example, the LED lamp beads may be uniformly arranged on a lamp board in a circle, a square, or other shape, which is not limited herein. Furthermore, a size of the lamp board is greater than 0mm (millimeter), which is not limited in the present disclosure. The size of the lamp board may be determined, for example, based on an actual situation such as a designed height and a projection area of the LED direct-view projection apparatus 30. It should be understood that the size of the lamp board decreases with the decrease of the designed height. The size of the lamp board increases with the increase of the projection area. In an example, the size of the lamp board is less than or equal to 60mm.

It should be noted that in the present disclosure, each LED lamp bead may be a monochromatic lamp bead, an RGB (red, green and blue) lamp bead, a white lamp bead, or the like. Each LED lamp bead may be or may not be provided with a driver IC (Integrated Circuit). If the LED lamp bead is provided with the driver IC, the driver IC may be arranged internally or externally. If the driver IC is arranged internally, the driver IC is arranged inside the LED lamp bead, and one driver IC controls one LED lamp bead. If the driver IC is arranged externally, the driver IC is arranged outside the LED lamp bead, and one driver IC controls multiple LED lamp beads.

In addition, each LED lamp bead may be processed with or without a small divergence angle. The processing with the small divergence angle is used for focusing and collimating light emitted from the LED lamp bead, so that more light energy enters the projection module 330 and is projected onto a surface of a projection object. In an embodiment of the present disclosure, the LED lamp bead may be an RGB lamp bead provided with the driver IC and processed with the small divergence angle. That is, the LED lamp bead includes a red light-emitting chip, a green light-emitting chip, and a blue light-emitting chip that are arranged in an inverted V shape, and light emitted by the red light-emitting chip, light emitted by the green light-emitting chip, and light emitted by the blue light-emitting chip are processed with a small divergence angle. In this way, full-color light emission can be realized to further enrich the display content.

It can be understood that the number of the LED lamp beads is determined based on the projection area, resolution, or other requirements, which is not limited herein. For the linkage system with LED projection and sound, the number of LED lamp beads increases with the increase of the projection area and the increase of the resolution. Furthermore, a distance between adjacent LED lamp beads is greater than 0mm, and the distance may depend on the height of the LED direct-view projection apparatus 30, or other actual factors. In an example, the distance between adjacent LED lamp beads is less than or equal to 5mm.

In this embodiment, the LED array 310 is connected to the linkage control apparatus 20, and is configured to control the light-emitting state of each LED lamp bead in the LED array 310 based on the to-be-displayed screen data. The beam-homogenizing and color-mixing component may be arranged on an optical path where light emitted from the LED array 310 travels; and the projection module 330 may be arranged on an optical path where light emitted from the beam-homogenizing and color-mixing component travels.

The beam-homogenizing and color-mixing component may be used for homogenization of light, color mixing, and serve as an imaging and display device. The light emitted by the LED array 310 passes through the beam-homogenizing and color-mixing component and is scattered on a surface of the beam-homogenizing and color-mixing component, thus achieving homogenization of light, color mixing and blurring processing, and creating a soft lighting effect with a bright center and a dark periphery (slowly transitioning outward from the center). The beam-homogenizing and color-mixing component is arranged between the LED array 310 and the projection module 330, and performs blurring processing and color mixing on the light emitted from the LED array to create the soft lighting effect with the bright center and the dark periphery, and then the projection module projects the light emitted from the beam-homogenizing and color-mixing component, producing an image or video that maintains the original resolution while achieving a blurred, ethereal, and soft sense, and creating a great sense of atmosphere.

For convenience of illustration, the following embodiment is described with the beam-homogenizing and color-mixing component including at least one beam homogenizer as an example. It should be understood that the beam-homogenizing and color-mixing component may include other components in addition to the beam homogenizer, which is not limited herein. Alternatively, the beam-homogenizing and color-mixing component does not include the beam homogenizer.

In an embodiment, the beam-homogenizing and color-mixing component may be a single-sided beam-homogenizing and color-mixing component (for example, a single beam homogenizer) or a double-sided beam-homogenizing and color-mixing component (for example, a double-sided beam homogenizer). In an embodiment of the present disclosure, the LED direct-view projection apparatus 30 may be composed of a single-sided beam-homogenizing and color-mixing component, and a scattering surface of the single-sided beam-homogenizing and color-mixing component serves as a light-emitting surface. In this way, the effect of projection display can be improved.

In an embodiment, the size of the beam-homogenizing and color-mixing component is greater than 0mm, depending on the actual situation, which is not limited herein.

In an embodiment, a distance between the scattering surface of the beam-homogenizing and color-mixing component and a light-emitting surface of the LED array 310 is greater than or equal to 0mm, depending on the actual situation, which is not limited herein. Furthermore, if the beam-homogenizing and color-mixing component includes the beam homogenizer, a distance between a scattering surface of the beam homogenizer 320 and the light-emitting surface of the LED array 310 is less than or equal to 20mm, thus reducing the height of the LED direct-view projection apparatus 30 while ensuring the effect of the projection display.

It should be noted that the distance between the scattering surface of the beam-homogenizing and color-mixing component and the light-emitting surface of the LED array 310 may be determined based on design requirements such as a designed height of the LED direct-view projection apparatus 30 and a focal length of the projection module, which is not limited herein. It can be understood that the distance between the scattering surface of the beam-homogenizing and color-mixing component and the light-emitting surface of the LED array 310 decreases as the designed height decreases.

Furthermore, in an example, the LED direct-view projection apparatus further includes a microlens array arranged between the LED array 310 and the beam-homogenizing and color-mixing component to further converge and collimate light, improving the light collection efficiency.

The projection module 330 may include a lens for projection imaging. The projection module 330 may project the light emitted from the beam homogenizer 320 onto a surface of a projection object to realize projection display. In the present disclosure, the focal length of the projection module 330 is greater than 0mm, depending on actual conditions such as a projection distance, a projection area, and the height of the LED direct-view projection apparatus 30, which is not limited herein.

It should be understood that the focal length of the projection module 330 decreases as the projection distance decreases/the projection area increases. The focal length of the projection module 330 decreases as the height of the LED direct-view projection apparatus 30 decreases.

In an example, the focal length of the projection module 330 is positively correlated with the height of the LED direct-view projection apparatus 30, so that pixels of the image or video formed by projection display has no significant difference in light intensity, thus achieving a uniform surface distribution.

The distance between the projection module 330 and the beam homogenizer 320 is greater than or equal to 0mm, depending on design requirements such as the designed height of the LED direct-view projection apparatus 30, or the like, which is not limited herein. In an example, the distance between the projection module 330 and the beam homogenizer 320 is less than or equal to 50mm. It can be understood that the distance between the projection module 330 and the beam homogenizer 320 decreases as the designed height decreases.

In the present disclosure, the diameter of the projection module 330 is greater than 0mm. The projection module 330 may include a single lens or multiple lenses. The lens described in the present disclosure may be one of the following lenses: a conventional lens, an unconventional lens, or a Fresnel lens. Furthermore, the unconventional lens may be one of the following lenses: a parabolic lens, a freeform surface lens, a microlens, or a microlens array.

It can be understood that if the projection module 330 includes multiple lenses, the multiple lenses may be any combination of the various types of lenses listed above. Taking double lenses as an example, the projection module 330 may include two conventional lenses, two Fresnel lenses, or include one conventional lens and one Fresnel lens.

In some embodiments, the lens according to the present disclosure is made of transparent material such as glass or acrylic.

In some embodiments, the projection module may be implemented by double lenses including the Fresnel lens and a convex lens to reduce the height of the LED direct-view projection apparatus 30. In an embodiment, the Fresnel lens is arranged on the optical path where light emitted from the beam homogenizer 320 travels, and the convex lens is arranged at the optical path where light emitted from the Fresnel lens travels. The Fresnel lens may be arranged in a forward direction, that is, an incident surface of the Fresnel lens is a smooth surface which allows more light to pass through, thereby ensuring maximum lighting efficiency.

Furthermore, the convex lens may be a plano-convex lens or a biconvex lens. In an example, the convex lens is the plano-convex lens, and is arranged in a forward direction. That is, an incident surface of the convex lens is a flat surface which allows more light to pass through, thereby ensuring maximum lighting efficiency.

Furthermore, in an example, the focal length of the Fresnel lens is equal to the focal length of the convex lens, in order to maximize the lighting efficiency of the projection module 330.

Furthermore, in an example, a distance between the Fresnel lens and the convex lens is less than or equal to 10mm. For example, the distance may be 0mm, 1mm, or 2mm, thus reducing the height of the LED direct-view projection apparatus 30 while ensuring the effect of projection display.

It can be understood that in the projection module 330, the number of the lens is greater than or equal to one, the focal length of the lens is greater than or equal to 0mm, and a distance between different lenses is greater than or equal to 0mm. A type of the lens may be comprehensively determined based on requirements on quality of projection imaging, the height and size of the LED direct-view projection apparatus 30, or the like. For example, if requirements on the LED direct-view projection apparatus 30 is low height and good imaging quality, the projection module 330 is a combination of multiple types of lenses with a short focal length, the less number of lenses, a short focal length of the lens, and a small distance between lenses.

In the embodiment described above, the beam homogenizer 320 performs blurring processing and color mixing on the light emitted from the LED array 310, creating the soft lighting effect with the bright center and the dark periphery (slowly transitioning from the center to the periphery), and the projection module 330 projects the light emitted from the beam homogenizer 320, obtaining a display screen such as an image or video that maintains the original resolution while achieving a blurred, ethereal, and soft lighting effect, thereby further improving the display effect.

In the LED direct-view projection apparatus according to the above embodiment, the relationship between various conditions such as the size of the lamp board of the LED array 310, the distance between LED lamp beads, the focal length of the projection module 330, the focal length and the arrangement of each lens of the projection module 330, and the size, the height, and display lighting effect of the LED direct-view projection apparatus 30 is summarized, and a small-sized LED direct-view projection apparatus is provided. The LED direct-view projection apparatus according to the above embodiment has the advantages of small size, low height, and high lighting efficiency. Further, the size of the lamp board of the LED array 310, the distance between lamp beads, the focal length of the projection module 330, the focal length and the arrangement of each lens of the projection module 330 can be determined reasonably based on requirements on the size and the height of the LED direct-view projection apparatus 30, projection distance and projection area, so that the LED direct-view projection apparatus 30 can be better integrated into the sound apparatus 10.

For better understanding of the solutions in the present disclosure, an example is provided below for illustration.

Reference is made to FIGS. 1 to 4. The linkage system with LED projection and sound in this example may include a sound apparatus 10, a linkage control apparatus 20, and an LED direct-view projection apparatus 30. The LED direct-view projection apparatus 30 may include an LED array 310, a beam homogenizer 320, and a projection module 330. The projection module 330 is arranged on an optical path where light emitted from the beam homogenizer 320 travels, and the beam homogenizer 320 is arranged on an optical path where light emitted from the LED array 310 travels, and the linkage control apparatus 20 is connected to the sound apparatus 10 and the LED array 310.

The related descriptions of the sound apparatus 10 and the linkage control apparatus 20 may be referred to the embodiments described above, which are not repeated herein.

The LED direct-view projection apparatus 30 has a height from 40mm to 60mm, a diameter from 20mm to 150mm, a projection distance from 1.5m to 2.5m, and a projection area from 1m to 3m. The LED array 310 includes 50 to 500 LED lamp beads, and the LED lamp beads are uniformly arranged on a lamp board in a circle or square. An interval/size of adjacent LED lamp beads ranges from 0.5mm to 5mm, and a size of the lamp board ranges from 10mm to 50mm.

A diameter of the beam homogenizer 320 ranges from 20mm to 150mm, single-sided light is uniform, and a scattering surface of the beam homogenizer 320 is a light-emitting surface. A distance between the scattering surface of the beam homogenizer 320 and an upper portion (i.e., a light-emitting surface) of the LED array 310 ranges from 1mm to 10mm.

A distance between the projection module 330 and the beam homogenizer 320 ranges from 1mm to -50mm. The projection module 330 may be implemented by double lenses including a Fresnel lens and a convex lens. The convex lens may be a plano-convex lens, and has a diameter ranging from 20mm to 150mm.

A focal length of the Fresnel lens is equal to a focal length of the convex lens. The focal length of the Fresnel lens ranges from 40mm to 120mm, and the Fresnel lens is arranged in a forward direction (i.e., an incident surface of light is a smooth surface). The focal length of the convex lens ranges from 40mm to 120mm, and the convex lens is arranged in a forward direction (i.e., an incident surface of light is a flat surface). A distance between the Fresnel lens and the plano-convex lens is less than or equal to 10mm. In an embodiment, the distance is 0mm.

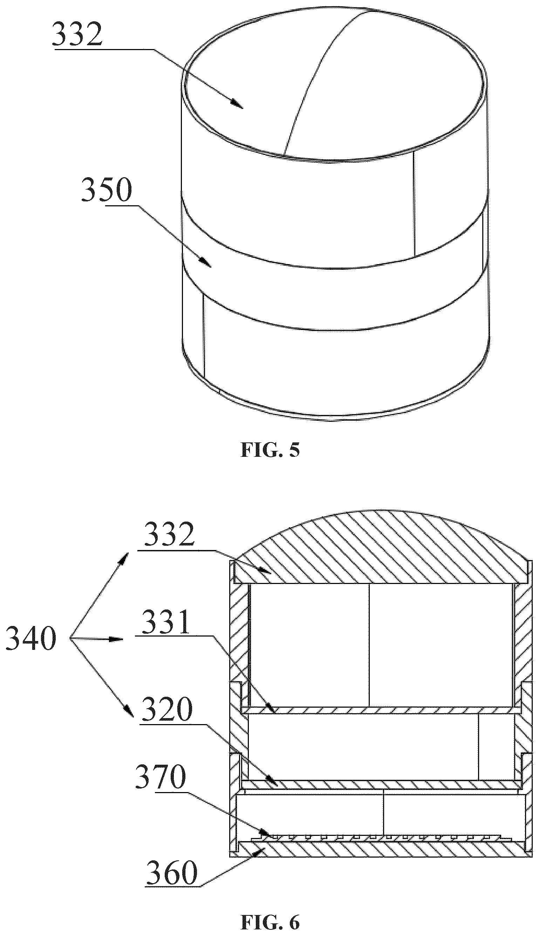

As shown in FIGS. 5 to 7, a dynamic atmosphere projection system is provided according to some embodiments of the present disclosure. It can be understood that the dynamic atmosphere projection system refers to the LED direct-view projection apparatus described in other embodiments of the present disclosure, that is, the LED direct-view projection apparatus and the dynamic atmosphere projection system refer to one component with different names.

In the present disclosure, the dynamic atmosphere projection system includes a housing 350. A light channel is formed in the housing 350. A beam generator 370 for emitting a beam of light with a dynamic pattern and a lens group 340 are arranged in the light channel.

It should be understood that the beam generator 370 refers to a component for providing a projection light source, which corresponds to the LED array 310 described in other embodiments herein. That is, in the description of the present disclosure, the LED array 310 and the beam generator 370 may refer to the same component. A beam path of the beam generator 370 corresponds to the optical path where light emitted from the LED array 310 travels described in other embodiments herein.

The lens group 340 refers to a structure including one or more lenses, which corresponds to the beam-homogenizing and color-mixing component and the projection module 330 described in other embodiments herein. That is, in some embodiments of the present disclosure, the lens group 340 includes the beam-homogenizing and color-mixing component and the projection module 330, and the lens group 340 refers to a combination of the beam-homogenizing and color-mixing component and the projection module 330.

In the LED direct-view projection apparatus 30, an LED array 310 for emitting a beam of light with a dynamic pattern, the beam-homogenizing and color-mixing component, and the projection module 330 are arranged in the light channel.

The lens group 340 includes at least one of the beam homogenizer 320, a first collimating lens 331, and a second collimating lens 332. The beam homogenizer 320 is arranged on the beam path of the beam generator 370, and the first collimating lens 331 and the second collimating lens 332 are sequentially arranged on the optical path where light emitted from the beam homogenizer 320 travels.

The light with the pattern emitted by the beam generator 370 first passes through the beam homogenizer for cutting off unevenly distributed light. When the light is passed through the beam homogenizer, part of light with the pattern propagates deviating from the original direction due to scattering effect, and another part of light continues to travel forward to form a soft and blurred projection pattern. Due to the divergence of a large amount of light, the projection pattern is excessively magnified and dim, failing to fully achieve the lighting effect and atmosphere desired by the user. Therefore, in this embodiment, the first collimating lens 331 and the second collimating lens 332 are arranged behind the beam homogenizer 320 to collimate and focus the light with the pattern. As the beams of light pass through the first collimating lens 331, the first collimating lens 331 collects and focuses beams of light from edges of the pattern to improve the projected lighting effect and make the pattern appear more accurate. The second collimating lens 332 further collects scattered light to improve the lighting effect. After passing through the second collimating lens 332, the scattered light is converted into parallel light, so that the projection pattern can maintain sufficient brightness and can be directly projected onto a wall or ceiling at a certain distance without distortion, and the edges of the pattern transit more smoothly, while the pattern has both the sense of atmosphere and clarity.

In some embodiments of the present disclosure, the first collimating lens 331 includes a Fresnel lens 3311 to reduce the volume and weight of the device. The Fresnel lens is an optical element with a fine structure. A surface of the Fresnel lens is formed by a succession of concentric rings, each ring may be regarded as a small convex lens or concave lens. According to the curvature of the surface of lens and refraction principle, light is refracted on the surface of lens, and the curvature of the surface of the lens determines a refraction angle, achieving focus and diffusion of the light.

For convenience of distinguishing, the Fresnel lens 3311 included in the first collimating lens 331 is referred to as a first Fresnel lens in the present disclosure. A focusing surface side of the first Fresnel lens is arranged away from the beam homogenizer 320. The arrangement of the Fresnel lens can achieve faster focusing in a shorter path, thereby improving the lighting effect and clarity of the pattern.

In some embodiments, the second collimating lens 332 includes a plano-convex lens 3312. The beam homogenizer 320, the first Fresnel lens and the plano-convex lens are sequentially arranged to be parallel to each other in the light channel, and beams of light pass through a convex surface of the plano-convex lens to form a soft image projection onto a projection object.

In an embodiment, the beam of light passes through the convex surface of the plano-convex lens to form the soft image projection onto the projection object. The divergent light with the pattern is collimated and focused after passing through the plano-convex lens, and parallel light is emitted from the plano-convex lens, so that the projection system in this embodiment can present dynamic images of the same size onto the projection objects with different distances, ensuring that the projection remains clear and has a soft shape edge at each distance, and enhancing the sense of atmosphere of projection.

In some embodiments, the beam homogenizer 320 includes a light guide plate and an atomization layer covering the light guide plate, and the atomization layer covers one or both sides of the light guide plate. The incident light is scattered by nanoparticles distributed on the atomization layer, thereby converting a line light source and a point light source generated by the beam generator 370 into area light. The scattering degree of the light with the pattern and the projection brightness are further modified by changing the number of the atomization layer.

In an example, the distance between the beam homogenizer 320 and the beam generator 370 ranges from 1mm to 50mm, in order to achieve a sense of softer and clearer atmosphere. A distance between the first collimating lens 331 and the beam homogenizer 320 ranges from 1mm to 100mm, and a focal length of the first collimating lens 331 ranges from 20mm to 300mm. A distance between the second collimating lens 332 and the first collimating lens 331 ranges from 1mm to 200mm, and a focal length of the second collimating lens 332 ranges from 20mm to 300mm. It should be noted that it is understood for those skilled in the art that modifying the focal lengths of several lenses and distances between the lenses to achieve a soft and clear projection effect of dynamic pattern is readily conceivable.

In some embodiments, as shown in FIGS. 5 to 7, the housing 350 is provided with a heat dissipation plate 360. The heat dissipation plate 360 abuts against the beam generator 370, and the heat dissipation plate 360 is made of metal material. The heat generated by a heating component is transferred to the housing 350 by using the thermal conductivity of the metal.

In an embodiment, a main optical axis of the first collimating lens331 coincides with a main optical axis of the second collimating lens 332, in order to make the projection and the pattern emitted by the beam generator 370 more regular and avoid deformation. In an embodiment, a central axis of the beam generator 370 coincides with a central axis of the beam homogenizer 320, and the centers of the elements in the light channel are on the same axis, thus producing the same refraction and focusing effect when the beam of light enters the beam homogenizer 320, so that the projection pattern is not distorted finally.

In some embodiments, the beam generator 370 in the present disclosure may include a substrate 371 and multiple lamp beads 372 arranged on the substrate 371, in order to produce more diverse projection contents, where the lamp beads are arranged in an array. It can be understood that the "lamp bead" described herein and the "LED lamp bead" described in other embodiments herein refer to the same component.

The color, on-off, and light intensity of each lamp bead 372 are controlled, so that the beam generator 370 can edit and drive a light source board of the LED array 310 to display different images with dynamic lighting effect through light controller software like a television screen. The LED lamp bead on the substrate 371 is the point light source, and emits light in a divergent state of spreading around, failing to form an image on the projection object. In order to allow the divergent light generated by the light-emitting baseplate to accurately project a pattern after passing a certain distance, the lens group 340 is arranged in the light channel to collimate and focus the divergent light with the pattern.

In some embodiments, the dynamic atmosphere projection system further includes a lighting effect controller. The lighting effect controller is communicatively connected to the light-emitting baseplate. In addition, the lamp beads 372 are arranged in a rectangular array or an annular array on the substrate 371. The lamp beads 372 are regularly arranged on the substrate 371, so that the lighting effect controller can accurately control the on-off and color of different lamp beads 372 in the array, thereby generating beams of light with different patterns, and achieving atmosphere projection with dynamic effects through the lens group 340.

The beam of light emitted by the beam generator 370 in the LED direct-view projection apparatus 30 according to the present disclosure is scattered after being refracted by the beam homogenizer 320, so that the emitted point light source and line light source are converted into area light, and the projection pattern has soft edge transition. The first collimating lens 331 and the second collimating lens 332 are configured to collimate and focus the beam of light, so that the final projection pattern is more accurate in shape, and the scattered light is sufficiently collected to enhance lighting effect and prevent the image from being too dim, thereby effectively enhancing the sense of atmosphere and layering of the projection.

In some embodiments, as shown in FIG. 6, a soft lens module is provided according to the present disclosure. It should be noted that the soft lens module described in the present disclosure corresponds to the housing 350 and the lens group 340 described in other embodiments herein. That is, in the present disclosure, the soft lens module includes the housing 350 and the lens group 340, and the soft lens module refers to a combination of the housing 350 and the lens group 340. In addition, a soft module described in the embodiment of the present disclosure corresponds to the lens group 340 described in other embodiments herein. That is, in the description of the present disclosure, the soft module and the lens group 340 refer to the same component.

The soft lens module according to the present disclosure includes the housing 350, where a light channel is formed in the housing 350. The soft module is arranged in the light channel, and includes a beam homogenizer 320, a Fresnel lens and a plano-convex lens. The beam homogenizer 320, the Fresnel lens, and the plano-convex lens are sequentially arranged to be parallel to each other in the light channel.

The light with the pattern first passes through the beam homogenizer for cutting off unevenly distributed light. When the light is passed through the beam homogenizer, part of light with the pattern propagates deviating from the original direction due to scattering effect, and another part of the light continues to travel forward to form a soft and blurred projection pattern. Due to the divergence of a large amount of light, the projection pattern is excessively magnified and dim, failing to fully achieve the lighting effect and atmosphere desired by the user. Therefore, in this embodiment, the Fresnel lens and the plano-convex lens are arranged behind the beam homogenizer 320 to collimate and focus the light with the pattern. As the beam of light passes through the Fresnel lens, the Fresnel lens collects and focuses the beam of light from the edges of the pattern to improve the projected lighting effect and make the pattern appear more accurate. The plano-convex lens further collects scattered light to improve the lighting effect. After passing through the plano-convex lens, the scattered light is parallel to each other, so that the projection pattern can maintain sufficient brightness and can be directly projected onto a wall or ceiling at a certain distance without distortion, and the he edges of the pattern transit more smoothly, while the pattern has both the sense of atmosphere and clarity.

Furthermore, the beams of light pass through the convex surface of the plano-convex lens to form a soft image projection onto the projection object. The divergent light with the pattern is collimated and focused after passing through the plano-convex lens, and the parallel light is emitted from the plano-convex lens, so that the projection system in this embodiment can present dynamic images of the same size on the projection objects with different distances, ensuring that the projection remains clear and has a soft shape edge at each distance, and enhancing the sense of atmosphere of projection.

In some embodiments, the Fresnel lens in this embodiment includes a Fresnel lens to reduce the volume and weight of the device. A focusing surface side of the Fresnel lens is arranged away from the beam homogenizer 320. The Fresnel lens is an optical element with a fine structure. The surface of the Fresnel lens is formed by a succession of concentric rings, each ring may be regarded as a small convex lens or concave lens. According to the curvature of the surface of lens and refraction principle, light is refracted on the surface of lens, and the curvature of the surface of the lens determines a refraction angle, achieving focus and diffusion of the light. The arrangement of the Fresnel lens can achieve faster focusing in a shorter path, thereby improving the lighting effect and clarity of the pattern.

In some embodiments, the beam homogenizer 320 in this embodiment includes a light guide plate and an atomization layer covering the light guide plate, and the atomization layer covers one or both sides of the light guide plate. The incident light is scattered by the nanoparticles distributed on the atomization layer, thereby converting the light with the pattern into area light. The scattering degree of the light with the pattern and the projection brightness are further modified by changing the number of the atomization layer.

In some embodiments, a focal length of the Fresnel lens ranges from 20mm to 300mm. The distance between the plano-convex lens and the Fresnel lens ranges from 1mm to 200mm, and a focal length of the plano-convex lens ranges from 20mm to 300mm. It should be noted that it is understood for those skilled in the art that modifying the focal lengths of several lenses and distances between the lenses to achieve a soft and clear dynamic pattern projection effect is readily conceivable.

In some embodiments of the present disclosure, a main optical axis of the beam homogenizer 320, a main optical axis of the Fresnel lens and a main optical axis of the plano-convex lens coincide with each other, in order to make a projection outline more regular and avoid deformation. The centers of the elements in the light channel are on the same axis, thus producing the same refraction and focusing effect when the beam of light enters the beam homogenizer 320, so that the projection pattern is not distorted finally.

In some embodiments, a cross-sectional shape of the light channel formed in the housing 350 is circular, that is, the light channel is a cylinder, in order to improve the lighting effect. When arriving at the inner wall of the housing 350, the scattered light emitted by the light-emitting baseplate are reflected and continue to travel forward, so as to improve the utilization rate of light and prevent the projection from being too dim.

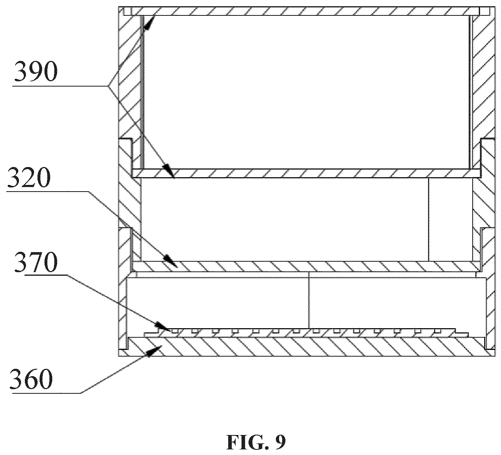

As shown in FIG. 5, FIGS. 7 to 9, and FIG. 12, a novel atmosphere projection system is provided according to some embodiments of the present disclosure. It can be understood that the novel atmosphere projection system refers to the LED direct-view projection apparatus 30 described in other embodiments of the present disclosure, that is, the LED direct-view projection apparatus 30 and the novel atmosphere projection system refer to one component with different names.

In the conventional technology, the existing projection lamp with the pattern generally adopts a combination of a film and a light source, allowing the beam of light to directly pass through the film with the pattern to form a projection onto the projection object. Due to the limitation of the film, the projection lamp is only able to project a static pattern, and it is necessary to replace the film to change the pattern to another pattern, resulting in a complicated changing procedure. In addition, since the projection is produced by parallel beams of light directly passing through the film, the edge line of the projection pattern is sharp and lack of soft transition, which is difficult to meet the requirements of users.

Based on this, as shown in FIG. 5, FIGS. 7 to 9 and FIG. 12, a novel atmosphere projection system is provided according to the present disclosure. The novel atmosphere projection system includes: a housing 350, a beam homogenizer 320, and at least one condenser lens 390. The condenser lens 390 includes one of a Fresnel lens, a plano-convex lens, and a convex lens. In the novel atmosphere projection system, the second collimating lens 332 shown in FIG. 5 may be replaced with the condenser lens 390.

A light channel is formed in the housing 350. A beam generator 370 for emitting a beam of light with a dynamic pattern, a beam homogenizer 320, and at least one condenser lens 390 are arranged in the light channel.

It should be understood that the beam generator 370 refers to a component for providing a projection light source, which corresponds to the LED array 310 described in other embodiments herein. That is, in the description of the present disclosure, the LED array 310 and the beam generator 370 may refer to the same component. The beam path of the beam generator 370 corresponds to the optical path where the light emitted from the LED array 310 travels described in other embodiments herein. The beam homogenizer 320 corresponds to the beam-homogenizing and color-mixing component described in other embodiments herein, and the at least one condenser lens 390 corresponds to the projection module 330 described in other embodiments herein.

The beam homogenizer 320 and the condenser lens 390 are sequentially arranged on the beam path of the beam generator 370, and the light with the pattern emitted from the beam generator 370 passes through the beam homogenizer 320 and the condenser lens 390 sequentially to form a soft image projection. The beam generator 370 in this embodiment includes a substrate 371 and multiple lamp beads 372 arranged in an array on the substrate 371, in order to produce more diverse projection content. It can be understood that the "lamp bead" described herein and the "LED lamp bead" described in other embodiments herein refer to the same component. The color, on-off, and light intensity of each lamp bead 372 are controlled, so that the beam generator 370 can edit and drive a light source board of the LED array 310 to display different images with dynamic lighting effect through light controller software like a television screen. A terminal device is connected to the beam generator 370 according to the requirements of the user, and controls the beam generator 370 to project various scenes or objects such as animals, scenery, or flames.

The light with the pattern emitted by the beam generator 370 first passes through the beam homogenizer 320 for cutting up unevenly distributed light. When the light passes through the beam homogenizer 320, part of light with the pattern propagates deviating from the original direction due to scattering effect, and another part of light continues to travel forward, to cause corresponding light at various positions in the projection pattern to appear as light spot on the projection object, forming a soft and blurred projection pattern. The arrangement of the beam homogenizer 320 can conveniently modify the size of the light spot.

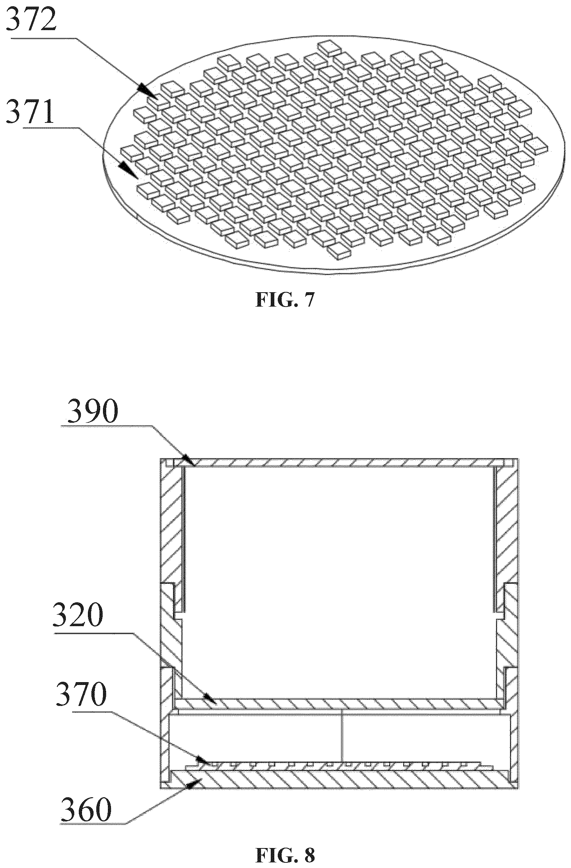

After passing through the beam homogenizer 320, a large amount of light with the pattern are formed as scattered light spots, the projection pattern is excessively magnified and dim, failing to fully achieve the lighting effect and atmosphere desired by the user. To address this problem, a condenser lens 390 is arranged behind the beam homogenizer 320 to collimate and focus the light with the pattern. As shown in FIG. 8, when the beams of light with the pattern passes through the condenser lens 390, the condenser lens 390 gathers and focuses the scattered light with the pattern, significantly enhancing the lighting effect of the projection. The beams of light with the pattern are emitted from the condenser lens 390 either in a parallel manner or with a small divergence angle. By combining the beam homogenizer 320 and the condenser lens 390, the dynamic beams of light with the pattern are softened while effectively controlling the brightness and scattering degree of the beams of light, so that the projection outline is more accurate and has a sense of soft atmosphere.

In an embodiment, the condenser lens 390 includes one of a Fresnel lens, a plano-convex lens, and a convex lens, and these lenses change the optical path according to the principle of refraction of light, thereby focusing the divergent dynamic beams of light with the pattern, improving the light collection efficiency, correcting the optical path of the beams of light with the pattern, and avoiding excessive distortion and divergence of the pattern. Therefore, the above-described lenses have similar effects, and those skilled in the art may adjust them depending on the actual requirements of the product. The focusing surface side of the condenser lens 390 in the embodiment of the present disclosure is arranged away from the beam homogenizer 320. The plano-convex lens is a kind of convex lens. One surface of the plano-convex lens is a convex surface and the other surface is a flat surface. Light parallel to the main optical axis enters from the flat surface and is refracted by the convex surface, then converges towards the main optical axis and passes through a focus point. Therefore, one side of the convex surface is the focusing surface. The Fresnel lens is an optical element with a fine structure. The surface of the Fresnel lens is formed by a succession of concentric rings, each ring may be regarded as a small convex lens or concave lens. According to the curvature of the surface of lens and refraction principle, light is refracted on the surface of lens, and the curvature of the surface of the lens determines a refraction angle, achieving focus and diffusion of the light. One side of the ring of the Fresnel lens is the focusing surface. The arrangement of the Fresnel lens can achieve faster focusing in a shorter path, thereby improving the lighting effect and clarity of the pattern.

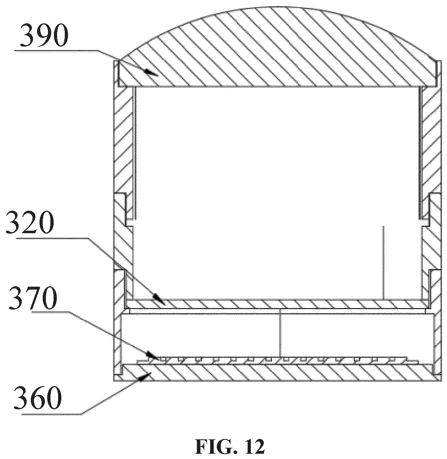

In some embodiments, as shown in FIG. 12, two condenser lenses 390 are arranged behind the beam homogenizer 320, in order to enhance the sense of layering and softness of the projection image. The light with the pattern is still in a divergent state after passing through the first condenser lens, and the divergent light is converted into parallel light after passing through the second condenser lens. Since the beams of light pass through two layers of lenses, a projection pattern onto the projection object has more sense of layering. The projection pattern maintains sufficient brightness and can be directly projected onto a wall or ceiling at a certain distance without distortion. The edges of the pattern transit more smoothly, while the pattern has both the sense of atmosphere and clarity.

The light with the pattern are still in a divergent state after passing through the first condenser lens, and the light continues to pass through the second condenser lens to form a soft projection image onto the projection object. The divergent light with the pattern is collimated and focused after passing through the second condenser lens, and the parallel light is emitted from the second condenser lens, thereby ensuring that the projection system in this embodiment can present dynamic images of the same size onto the projection objects with different distances, ensuring that the projection remains clear and has a soft shape edge at each distance, and enhancing the sense of atmosphere of projection.

The two condenser lenses 390 in this embodiment may be the same or different from each other, and the condenser lens 390 is mainly configured to improve the light collection efficiency and to focus the light, which is achieved by adopting different condenser lenses 390.

In some embodiments, the beam homogenizer 320 includes a light guide plate and an atomization layer covering the light guide plate, and the atomization layer covers one or both sides of the light guide plate. The incident beam of light is scattered by the nanoparticles distributed on the atomization layer, thereby converting the line light source and the point light source generated by the beam generator 370 into area light. The scattering degree of the light with the pattern and the projection brightness are further modified by changing the number of the atomization layer.

In some embodiments, the distance between the beam homogenizer 320 and the beam generator 370 in the present disclosure ranges from 0mm to 50mm, in order to achieve a sense of softer and clearer atmosphere. The distance between the condenser lens 390 and the beam homogenizer 320 ranges from 0mm to 100mm, and the focal length of the condenser lens 390 ranges from 20mm to 300mm.The distance between the two condenser lenses 390 ranges from 0mm to 200mm. It should be noted that for those skilled in the art that modifying the focal length of several lenses and distances between the lenses to achieve a soft and clear projection effect of dynamic pattern depends on actual situations.

In some embodiments, as shown in FIG. 8, the housing 350 in this embodiment is provided with a heat dissipation plate 360. The heat dissipation plate 360 abuts against the beam generator 370, and the heat dissipation plate 360 is made of metal material. The heat generated by the heating component is transferred to the housing 350 by using the thermal conductivity of the metal.

In an embodiment, a main optical axis of the beam homogenizer 320 coincides with a main optical axis of the condenser lens 390, in order to make the shape of the projection and the pattern emitted by the beam generator 370 more regular and avoid deformation. In an embodiment, a central axis of the beam generator 370 coincides with a central axis of the beam homogenizer 320, and the centers of the elements in the light channel are on the same axis, thus producing the same refraction and focusing effect when the beam of light enters the beam homogenizer 320, so that the projection pattern is not distorted finally.

In the novel atmosphere projection system according to the present disclosure, the beam generator 370 is composed of LED lamp beads to emit dynamic beams of light with the pattern to meet various needs of users. The beam of light emitted by the beam generator 370 is scattered after being refracted by the beam homogenizer 320, so that the emitted point light source and line light source are converted into area light, and the projection pattern has soft edge transition. At least two condenser lenses are arranged, to collimate and focus the beam of light several times, so that the final projection pattern is more accurate in shape, and the scattered light is sufficiently collected to enhance lighting effect and prevent the image from being too dim, thereby effectively enhancing the sense of atmosphere and layering of the projection.

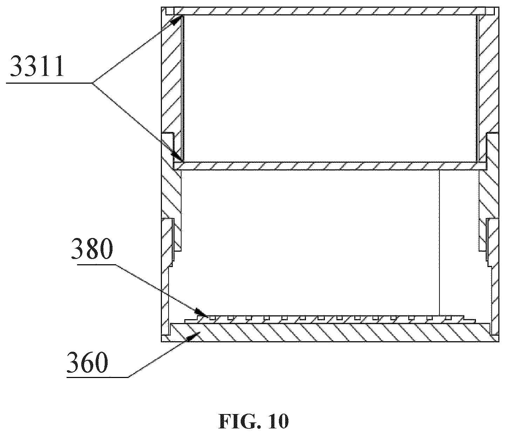

As shown in FIGS. 5, 7, and 10, an atmosphere projection lamp is provided according to some embodiments of the present disclosure. It can be understood that the atmosphere projection lamp refers to the LED direct-view projection apparatus 30 described in other embodiments of the present disclosure. That is, the LED direct-view projection apparatus 30 and the atmosphere projection lamp refer to one component with different names.

In the present disclosure, the atmosphere projection lamp includes a housing 350, where a light channel is formed in the housing 350. A light-emitting baseplate 380 for emitting a beam of light with a dynamic pattern and a lens group 340 are arranged in the light channel. The light-emitting baseplate 380 includes a substrate 371 and multiple lamp beads 372 arranged on the substrate 371, and the multiple lamp beads 372 are arranged in an array. By arranging the LED lamp beads in an array on the substrate 371, the light-emitting baseplate 380 may be more conveniently edited by the lighting effect editing software to generate dynamic pattern changes, thereby projecting different dynamic patterns of animals, weather, characters, or the like, onto the projection object, providing a basis for subsequent soft projection.

It should be noted that the light-emitting baseplate 380 refers to a component for providing a projection light source, which corresponds to the LED array 310 described in other embodiments herein. That is, in the description of the present disclosure, the LED array 310, the beam generator 370, and the light-emitting baseplate 380 refer to the same component. A beam path of the light-emitting baseplate 380 corresponds to the optical path where light emitted from the LED array 310 travels described in other embodiments herein. The LED array 310 may be connected to the linkage control apparatus in a wired manner or wireless manner.

The lens group 340 refers to a structure including one or more lenses, which corresponds to the projection module 330 described in other embodiments herein. That is, in some embodiments of the present disclosure, the lens group 340 and the projection module 330 refer to the same component. The "lamp bead" described herein and the "LED lamp bead" described in other embodiments herein refer to the same component.

The LED lamp bead on the substrate 371 is a point light source, and emits light in a divergent state of spreading around, failing to form an image on the projection object. In order to allow the divergent light generated by the light-emitting substrate 380 to accurately project a pattern after passing a certain distance, the lens group 340 is arranged in the light channel to collimate and focus the divergent light with the pattern.

The lens group 340 includes at least two Fresnel lenses 3311, and the two Fresnel lenses 3311 are sequentially arranged on the beam path of the light-emitting baseplate, so that light emitted from the light-emitting baseplate passes through the two Fresnel lenses sequentially to form a soft pattern projection.

For convenience of distinguishing, the two Fresnel lenses are referred to as a first Fresnel lens and a second Fresnel lens in the present disclosure. Where, the first Fresnel lens is arranged on an optical path where light emitted from the LED array 310 travels, and the second Fresnel lens is arranged on an optical path where light emitted from the first Fresnel lens travels.

Both the light-emitting baseplate 380 and the lens group 340 are arranged in the cylindrical housing 350, and the light with the pattern generated by the light-emitting baseplate 380 travels in one direction, thus improving the lighting effect. The beams of light first pass through the first Fresnel lens to collect and focus the beams of light at the edge of the pattern to achieve a higher lighting efficiency of the projection, so that the beams of light are slightly focused, and the pattern is more accurate. The second Fresnel lens further collects the scattered light to improve the lighting effect, and the divergent light is converted into parallel light after passing through the plano-convex lens, so that the projection pattern can maintain sufficient brightness and can be directly projected onto a wall or ceiling at a certain distance without deformation, and the edges of the pattern transit more smoothly, while the pattern has both the sense of atmosphere and clarity.

In some embodiments of the present disclosure, the Fresnel lens is used for collimating and focusing, to reduce the volume and weight of the device. The focusing surface side of the Fresnel lens 3311 is arranged away from the light-emitting baseplate. That is, the focusing surface side of the first Fresnel lens is arranged away from the LED array 310, and the focusing surface side of the second Fresnel lens is arranged away from the LED array 310.

The Fresnel lens is an optical element with a fine structure. The surface of the Fresnel lens includes a succession of concentric rings, each ring may be regarded as a small convex lens or concave lens. According to the curvature of the surface of lens and refraction principle, light is refracted on the surface of lens, and the curvature of the surface of the lens determines a refraction angle, achieving focus and diffusion of the light. The arrangement of the Fresnel lens can achieve faster focusing in a shorter path, thereby improving the lighting effect and clarity of the pattern.

The divergent light with the dynamic pattern is collimated and focused by two Fresnel lenses, so that the parallel light is emitted from the two Fresnel lenses, presenting dynamic images of the same size onto projection objects with different distances, ensuring that the projection remains clear and has a soft shape edge at each distance, and enhancing the sense of atmosphere of projection.

In some embodiments, the distance between the Fresnel lens and the light-emitting baseplate ranges from 1mm to 150mm, and the focal length of the Fresnel lens ranges from 20mm to 300mm, in order to achieve a sense of softer and clearer atmosphere. The distance between the plano-convex lens and the Fresnel lens ranges from 5mm to 200mm, and the focal length of the plano-convex lens ranges from 20mm to 300mm. It is understood for those skilled in the art that modifying the focal lengths of several lenses and distances between the lenses to achieve a soft and clear projection effect of dynamic pattern is readily conceivable.

In some embodiments, the housing 350 in the present disclosure is provided with a heat dissipation plate 360. The heat dissipation plate 360 abuts against the beam generator 370, and the heat dissipation plate 360 is made of metal material. The heat generated by the heating component is transferred to the housing 350 by using the thermal conductivity of the metal.

In some embodiments, main optical axes of the two Fresnel lenses coincide with each other, in order to make the projection and the pattern emitted by the beam generator 370 more regular and avoid deformation. In an embodiment, a central axis of the light-emitting baseplate coincides with a central axis of the beam homogenizer 320, and the centers of the elements in the light channel are on the same axis, thus producing the same refraction and focusing effect when the beam of light enters the beam homogenizer 320, so that the projection pattern is not distorted finally.

In some embodiments, a cross-sectional shape of the light channel formed in the housing 350 is circular, that is, the light channel is a cylinder, in order to improve the lighting effect. When arriving at the inner wall of the housing 350, the scattered light emitted by the light-emitting baseplate is reflected and continues to travel forward, so as to improve the utilization rate of light and prevent the projection from being too dim.

In some embodiments, the atmosphere projection lamp further includes a lighting effect controller, in order to better present different styles of dynamic patterns. The lighting effect controller is communicatively connected to the light-emitting baseplate 380. In addition, the lamp beads 372 are arranged in a rectangular array or an annular array on the substrate 371. By controlling the on-off and color of the different lamp beads 372 in the array, beams of light with different patterns are generated.

In the LED direct-view projection apparatus 30 according to the present disclosure, by controlling the multiple lamp beads 372 on the light-emitting baseplate 380, the beams of light with the dynamic pattern emitted by the light-emitting baseplate 380 are collimated and focused by two Fresnel lenses on the path, so that the beams of light with the pattern can project the pattern with an accurate outline onto the projection object after passing through a certain distance. The scattered light is sufficiently collected by the two lenses, so as to improve the lighting effect and prevent the image from being too dim, thereby effectively enhancing the sense of atmosphere and layering of the projection. In addition, the setting of the focal length of the two Fresnel lenses and the distance between the two Fresnel lenses ensures that the projection pattern onto the projection object has a sense of soft atmosphere.

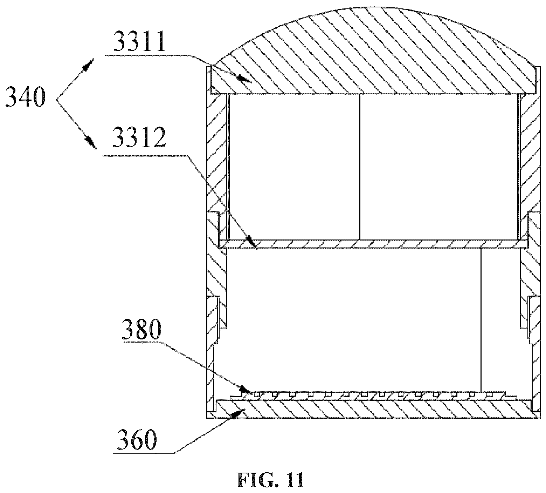

As shown in FIGS. 5, 7, and 11, an atmosphere projection lamp is provided according to some embodiments of the present disclosure. It can be understood that the atmosphere projection lamp refers to the LED direct-view projection apparatus 30 described in other embodiments of the present disclosure. That is, the LED direct-view projection apparatus 30 and the atmosphere projection lamp refer to one component with different names.

In the present disclosure, the atmosphere projection lamp includes a housing 350, where a light channel is formed in the housing 350. A light-emitting baseplate 380 for emitting a beam of light with a dynamic pattern and a lens group 340 are arranged in the light channel. The light-emitting baseplate 380 includes a substrate 371 and multiple lamp beads 372 arranged on the substrate 371, and the multiple lamp beads 372 are arranged in an array. By arranging the LED lamp beads in an array on the substrate 371, the light-emitting baseplate 380 may be more conveniently edited by the lighting effect editing software to generate dynamic pattern changes, thereby projecting different dynamic patterns of animals, weather, characters, or the like, onto the projection object, providing a basis for subsequent soft projection.

It should be noted that the light-emitting baseplate 380 refers to a component for providing a projection light source, which corresponds to the LED array 310 described in other embodiments herein. That is, in the description of the present disclosure, the LED array 310 and the light-emitting baseplate 380 refer to the same component. The beam path of the light-emitting baseplate 380 corresponds to the optical path where the light emitted from the LED array 310 travels described in other embodiments herein. The LED array 310 may be connected to the linkage control apparatus in a wired manner or wireless manner.

The lens group 340 refers to a structure including one or more lenses, which corresponds to the projection module 330 described in other embodiments herein. That is, in some embodiments of the present disclosure, the lens group 340 and the projection module 330 refer to the same component. The "lamp bead" described herein and the "LED lamp bead" described in other embodiments herein refer to the same component.

The LED lamp bead on the substrate 371 is a point light source, and emits light in a divergent state of spreading around, failing to form an image on the projection object. In order to allow the divergent light generated by the light-emitting substrate 380 to accurately project a pattern after passing a certain distance, the lens group 340 is arranged in the light channel to collimate and focus the divergent light with the pattern.

The lens group 340 includes at least one of a Fresnel lens 3311 and a plano-convex lens 3312, and the Fresnel lens 3311 and the plano-convex lens 3312 are sequentially arranged on the beam path of the light-emitting baseplate 380. Light emitted from the light-emitting baseplate 380 passes through the Fresnel lens 3311 and the plano-convex lens 3312 sequentially to form a soft pattern projection. Both the light-emitting baseplate 380 and the lens group 340 are arranged in the cylindrical housing 350, and the light with the pattern generated by the light-emitting baseplate 380 travel in one direction, and improving the lighting effect. The beams of light first pass through the Fresnel lens, to collect and focus the beams of light at the edge of the pattern to achieve a higher lighting efficiency of the projection, and the pattern is more accurate. The plano-convex lens further collects the scattered light to improve the lighting effect, the divergent light passes through the plano-convex lens, and parallel light is emitted from the plano-convex lens, so that the projection pattern can maintain sufficient brightness and can be directly projected onto the wall or ceiling at a certain distance without deformation, and the edges of the pattern transit more smoothly, while the pattern has both the sense of atmosphere and clarity.

In some embodiments, the Fresnel lens is used for the first collimation and focusing, and the focusing surface side of the Fresnel lens 3311 is arranged away from the light-emitting baseplate 380, in order to reduce the volume and weight of the device. The Fresnel lens is an optical element with a fine structure. The surface of the Fresnel lens is formed by a succession of concentric rings, each ring may be regarded as a small convex lens or concave lens. According to the curvature of the surface of lens and refraction principle, light is refracted on the surface of lens, and the curvature of the surface of the lens determines a refraction angle, achieving focus and diffusion of the light. The arrangement of the Fresnel lens can achieve faster focusing in a shorter path, thereby improving the lighting effect and clarity of the pattern.

Furthermore, the beam of light passes through the convex surface of the plano-convex lens 3312 to form the soft image projection onto the projection object. The divergent light with the pattern is collimated and focused after passing through the plano-convex lens 3312, and the parallel light is emitted from the plano-convex lens 3312, thus presenting dynamic images of the same size onto the projection object with different distances, ensuring that the projection remains clear and has a soft shape edge at each distance, and enhancing the sense of atmosphere of projection.

In some embodiments, the distance between the Fresnel lens 3311 and the light-emitting baseplate 380 ranges from 1mm to 150mm, and the focal length of the Fresnel lens 3311 ranges from 20mm to 300mm, in order to achieve a sense of softer and clearer atmosphere. The distance between the plano-convex lens 3312 and the Fresnel lens 3311 ranges from 1mm to 200mm, and the focal length of the plano-convex lens 3312 ranges from 20mm to 300mm. It is understood for those skilled in the art that modifying the focal lengths of several lenses and distances between the lenses to achieve a soft and clear projection effect of dynamic pattern is readily conceivable.

In some embodiments, the housing 350 in the present disclosure is provided with a heat dissipation plate 360. The heat dissipation plate 360 abuts against the beam generator 370, and the heat dissipation plate 360 is made of metal material. The heat generated by the heating component is transferred to the housing 350 by using the thermal conductivity of the metal.

In some embodiments, a main optical axis of the Fresnel lens coincides with a main optical axis of the plano-convex lens, in order to make the projection and the pattern emitted by the light-emitting baseplate 380 more regular and avoid deformation. In an embodiment, the central axis of the light-emitting baseplate, the central axis of the Fresnel lens and the central axis of the plano-convex lens coincide with each other. The centers of the elements in the light channel are on the same axis, thus producing the same refraction and focusing effects when the beam of light enters the optical module, so that the projection pattern is not distorted finally.

In the LED direct-view projection apparatus 30 according to the present disclosure, by controlling multiple lamp beads 372 on the light-emitting baseplate 380, the beams of light with the dynamic pattern emitted by the light-emitting baseplate 380 are collimated and focused by the Fresnel lens and the plano-convex lens on the path, so that the beams of light with the pattern can project the pattern with an accurate outline onto the projection object after passing through a certain distance. The scattered light is sufficiently collected by the two lenses, so as to improve the lighting effect and prevent the image from being too dim, thereby effectively enhancing the sense of atmosphere and layering of the projection. In addition, the setting of the focal length of the Fresnel lens and the plano-convex lens and the distance between the Fresnel lens and the plano-convex lens ensures that the projection pattern onto the projection object has a sense of soft atmosphere.

Finally, it should be noted that terms such as "center", "upper", "lower", "left", "right", "vertical", "horizontal", "inner", "outer", and the like indicate orientations or positional relationships which are based on the drawings. Such terms are only for the convenience of describing the present disclosure and simplifying the description, and do not indicate or imply that the discussed device or element must have a specific orientation or be configured and operated in a specific orientation. Hence, the terms should not be construed as limitations to the present disclosure.

Otherwise clear specification and definition are provided, terms such as "installation", "joint" and "connection" should be understood in a broad sense, such as a fixed connection, a detachable connection or an integral connection; a mechanical connection or an electrical connection, a direct connection or an indirect connection through an intermediate media, or an internal connection inside two components. For those skilled in the art, the specific meaning of the above terms in the present disclosure may be understood in the light of specific circumstances.

In addition, the relational terms such as "first", "second", "third", and "fourth" are merely used to distinguish one entity or operation from another, rather than to necessitate or imply any actual relationship or sequence between these entities or operations, and should not be understood as indicating or implying relative importance.

Terms such as "include", "comprise" or any variants thereof are intended to be non-exclusive. Therefore, a process, method, article or device including a series of elements includes not only the elements but also other elements that are not enumerated, or further includes elements inherent to the process, method, article or device. Unless expressively limited, the statement "including a..." does not exclude the case that other similar elements may exist in the process, method, article or device including the series of elements.

The terms "a", "an", "said", "the", and "that" may be in singular form or include plural forms, unless the context clearly indicates otherwise. "Multiple" refers to a quantity of at least two, such as two, three, five, or eight. The "and/or" includes any and all combinations of related listed items.

The embodiments in the present disclosure are described in a progressive manner, and each of the embodiments focuses on its differences from the other embodiments. Various embodiments may be combined with each other as needed. The same or similar parts among the embodiments may be referred to each other.

According to the disclosed embodiments described above, those skilled in the art can implement or use the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

## Claims

1. A linkage system with light-emitting diode, LED, projection and sound, comprising:
a sound apparatus, configured to play audio data;
a linkage control apparatus connected to the sound apparatus, configured to call a preconfigured artificial intelligence, AI, service, and identify audio content of the audio data by using the AI service to obtain to-be-displayed screen data; and
an LED direct-view projection apparatus, connected to the linkage control apparatus, and configured to perform projection display on the to-be-displayed screen data.

2. The linkage system according to claim 1, wherein the LED direct-view projection apparatus comprises:
an LED array, connected to the linkage control apparatus, and configured to control a light-emitting state of each LED lamp bead in the LED array based on the to-be-displayed screen data, wherein the LED lamp bead serves as a pixel unit;
a beam-homogenizing and color-mixing component, arranged on an optical path where light emitted from the LED array travels; and
a projection module, arranged on an optical path where light emitted from the beam-homogenizing and color-mixing component travels.

3. The linkage system according to claim 2, wherein the projection module comprises at least one of:
a conventional lens;
an unconventional lens; or
a Fresnel lens,
wherein the unconventional lens comprises at least one of:
a parabolic lens;
a freeform surface lens;
a microlens; or
a microlens array,
wherein the conventional lens comprises at least one of:
a plano-convex lens; or
a convex lens.

4. The linkage system according to any one of claims 2 to 3, wherein the LED direct-view projection apparatus further comprises a housing, wherein
a light channel is formed in the housing, and the LED array for emitting a beam of light with a dynamic pattern, the beam-homogenizing and color-mixing component and the projection module are arranged in the light channel, wherein
the beam-homogenizing and color-mixing component comprises at least one beam homogenizer arranged at the optical path where light emitted from the LED array travels; and
the projection module comprises:
a first collimating lens, arranged on an optical path where light emitted from the at least one beam homogenizer travels; and
a second collimating lens, arranged on an optical path where light emitted from the first collimating lens travels, wherein light emitted from the LED array passes through the beam-homogenizing and color-mixing component, the first collimating lens and the second collimating lens sequentially to form a soft image projection.

5. The linkage system according to claim 4, wherein
the first collimating lens comprises a first Fresnel lens, wherein a focusing surface side of the first Fresnel lens is arranged away from the at least one beam homogenizer; and
the second collimating lens comprises a convex lens arranged on an optical path where light emitted from the first Fresnel lens travels,
wherein the convex lens is a plano-convex lens, and an incident surface of the plano-convex lens is a flat surface, wherein
the at least one beam homogenizer, the first Fresnel lens and the plano-convex lens are sequentially arranged to be parallel to each other in the light channel, and the beam of light passes through a convex surface of the plano-convex lens to form the soft image projection onto a projection object.

6. The linkage system according to claim 4, wherein
the first collimating lens comprises a first Fresnel lens, wherein a focusing surface side of the first Fresnel lens is arranged away from the at least one beam homogenizer; and
the second collimating lens comprises a second Fresnel lens arranged on an optical path where light emitted from the first Fresnel lens travels.

7. The linkage system according to claim 4, wherein
a distance between the first collimating lens and the at least one beam homogenizer ranges from 1mm to 100mm, and a focal length of the first collimating lens ranges from 20mm to 300mm;
a distance between the second collimating lens and the first collimating lens ranges from 1mm to 200mm, and a focal length of the second collimating lens ranges from 20mm to 300mm; and
a distance between a scattering surface of the at least one beam homogenizer and a light-emitting surface of the LED array is less than or equal to 20mm.

8. The linkage system according to claim 4, wherein the at least one beam homogenizer each comprises a light guide plate and an atomization layer covering the light guide plate, and the atomization layer is configured to cover one or both sides of the light guide plate.

9. The linkage system according to claim 1, wherein the LED direct-view projection apparatus comprises:
a housing, wherein a light channel is formed in the housing;
an LED array, arranged in the light channel and connected to the linkage control apparatus, and configured to emit a beam of light with a dynamic pattern, wherein the LED array comprises:
a substrate; and
at least one lamp bead arranged on the substrate, wherein the lamp beads are arranged in an array when a quantity of the at least one lamp bead is more than one; and
a projection module, arranged in the light channel, wherein the projection module comprises:
a first Fresnel lens, arranged on an optical path where light emitted from the LED array travels; and
a second Fresnel lens, arranged on an optical path where light emitted from the first Fresnel lens travels,
wherein light emitted from the LED array passes through the first Fresnel lens and the second Fresnel lens sequentially to form a soft image projection.

10. The linkage system according to claim 9, wherein a focusing surface side of the first Fresnel lens is arranged away from an LED array, and a focusing surface side of the second Fresnel lens is arranged away from the LED array.

11. The linkage system according to claim 9, wherein a distance between the first Fresnel lens and the LED array ranges from 1mm to 350mm, and a focal length of the first Fresnel lens ranges from 20mm to 300mm.

12. The linkage system according to claim 1, wherein the LED direct-view projection apparatus comprises:
a housing, wherein a light channel is formed in the housing;
an LED array, arranged in the light channel and connected to the linkage control apparatus, and configured to emit a beam of light with a dynamic pattern, wherein the LED array comprises:
a substrate; and
at least one lamp bead arranged on the substrate, wherein the lamp beads are arranged in an array when a quantity of the at least one lamp bead is more than one; and
a projection module, arranged in the light channel, wherein the projection module comprises:
a first Fresnel lens, arranged on an optical path where light emitted from the LED array travels; and
a plano-convex lens, arranged on an optical path where light emitted from the first Fresnel lens travels,
wherein light emitted from the LED array passes through the first Fresnel lens and the plano-convex lens sequentially to form a soft image projection.

13. The linkage system according to claim 12, wherein a focusing surface side of the first Fresnel lens is arranged away from an LED array, and a focusing surface side of the plano-convex lens is arranged away from the LED array.

14. The linkage system according to claim 12, wherein
a distance between the first Fresnel lens and the LED array ranges from 1mm to 150mm, and a focal length of the first Fresnel lens ranges from 20mm to 300mm; and
a distance between the plano-convex lens and the first Fresnel lens ranges from 1mm to 200mm, and a focal length of the plano-convex lens ranges from 20mm to 300mm.

15. The linkage system according to any one of claims 4, and 9 to 14, wherein the housing is provided with a heat dissipation plate, the heat dissipation plate abuts against the LED array, and the heat dissipation plate is made of metal material.
